# EUROPÄISCHE PATENTSCHRIFT

(11) **EP 0 583 612 B1**
(45) Veröffentlichungstag und Bekanntmachung des Hinweises auf die Patenterteilung: **12.06.2002**
(21) Anmeldenummer: 93111218.9
(22) Anmeldetag: 13.07.1993
(51) Int. Cl.: H04Q 11/04, H04J 3/06, H04L 7/10, H04L 25/02

(54) **Verfahren zum automatischen Ankoppeln eines Kommunikationssystems an einen externen Referenztakt**
Method for automatically connecting a communication system to an external reference clock
Procédé pour connecter automatiquement un système de communication à une horloge de référence externe

(30) Priorität: 18.08.1992 DE 4227283
(43) Veröffentlichungstag der Anmeldung: 23.02.1994
(73) Patentinhaber: SIEMENS AKTIENGESELLSCHAFT, 80333 München (DE)
(72) Erfinder: Hoppe, Martin, Dipl.-Ing., D-59071 Hamm (DE); Leimkötter, Ulrich, Dipl.-Ing., D-45888 Gelsenkirchen (DE)

(56) Entgegenhaltungen:
- EP-A- 0 360 924
- US-A- 5 222 130
- TELCOM REPORT - SONDERHEFT "ISDN IM BüRO-HICOM", 1985, BERLIN (DE) Seiten 58 - 66 BECKINGER ET AL 'Hardware-Struktur des HICOM-Kommunikationscomputers'

## Beschreibung

Die Erfindung betrifft ein Verfahren gemäß Patentanspruch 1.

Das Integrieren von ISDN-Funktionen in eine bereits vorhandene Netzumgebung bedeutet eine große Vielfalt an Funktionen in Peripherie und Steuerung. Unterschiedliche Gerätetypen und Netze für Sprach-, Text-, Daten- und Bildkommunikation erfordern verschiedene Schnittstellen, Signalisierungen, Übertragungsgeschwindigkeiten und Protokolle. Diese Funktionen sowie die Möglichkeit einer technologischen und funktionellen Innovation werden durch zeitgemäße, modular aufgebaute ISDN-Kommunikationssysteme bereitgestellt. Die Systemsteuerung realisiert das Durchschalten sowie das Speichern und Verarbeiten mit einem einheitlichen, modularen Prozessorkonzept. Basis der Systemsteuerung in einem digitalen ISDN-Kommunikationssystem ist ein einheitlicher Systemtakt. Der Takt wird durch im System zentral integrierte Taktgeneratoren gebildet. In der Sonderausgabe 'telcom report' und Siemens Magazin COM, ISDN im Büro, Siemens Aktiengesellschaft, Berlin und München, 1985, Seiten 58 bis 66, sind derartige Taktgeneratoren beschrieben. Derartige Taktgeneratoren sind unabhängig von der Systemsteuerung zweifach ausgeführt; eine Ersatzschaltung erfolgt unmittelbar über Steuerleitungen. Die Taktgeneratoren synchronisieren sich auf einen externen Referenztakt auf, der über Amtsleitungen herangeführt wird.

Wird der führende Referenztakt unterbrochen, wird auf den parallelen Taktgenerator umgeschaltet. In der erwähnten Druckschrift ist in Bild 4 auf Seite 64 ein Taktgenerator aufgezeigt, der über Steuerleitungen mit einem, eine zentrale Steuereinrichtung bildenden Datenprozessor verbunden ist. Derartige Taktgeneratoren sind heute nicht mehr auf einem Modul integriert. Insbesondere die, die Schnittstellen zum externen Referenztakt bildenden Schnittstelleneinheiten sind auf Peripheriemodule der peripheren Einheiten des Kommunikationssystems ausgelagert. Somit bestehen zeitgemäße Taktgeneratoren aus peripheren und zentralen Anteilen. Die die peripheren Anteile bildenden Peripheriemodule sind zum einen über Taktleitungen mit den zentralen Anteilen der Taktgeneratoren verbunden, und zum anderen über Steuerleitungen an die zentrale Steuereinrichtung herangeführt. Über die Steuerleitungen werden Steuersignale von der zentralen Steuereinrichtung zu den Peripheriemodulen gesendet. Fällt beispielsweise ein von außen zugeführter Referenztakt aus, so wird dies über diese Steuerleitung durch Übermittlung einer entsprechenden Meldung der zentralen Steuereinrichtung mitgeteilt. Von dieser wird dann ein Umschaltesignal über die Steuerleitung zu dem parallelen Peripheriemodul gesendet. Problematisch an dieser Vorgehensweise ist jedoch, daß jeder physikalische Zustand der Peripheriemodule von der zentralen Steuereinrichtung erfaßt und jede Zustandsänderung durch Aussenden entsprechender Steuersignale von der zentralen Steuereinrichtung gesteuert werden muß. Dies bedeutet in der Praxis, daß der Datenfluß auf der Steuerleitung hohe Verkehrswerte annimmt. Da die zentrale Steuereinrichtung das Kernstück aller Steuerungen eines Kommunikationssystems ist, können die Steuervorgänge der Peripheriemodule des Taktgenerators unter Umständen zu Dynamikverlusten im gesamten Kommunikationssystem führen.

Der Erfindung liegt die Aufgabe zugrunde, den Datenfluß auf der zwischen den Peripheriemodulen des Taktgenerators und der zentralen Steuereinheit bestehenden Steuerleitung zu vermindern.

Die Erfindung wird ausgehend von dem bekannten Verfahren gemäß den Merkmalen des Oberbegriffs des Patentanspruchs 1 durch dessen kennzeichnende Merkmale gelöst.

Der wesentliche Aspekt der Erfindung ist das Auslagern von Steuerprozeduren und Steuerprozessen auf ein Peripheriemodul. Dies bedeutet, daß die beim Stand der Technik in einer zentralen Steuereinrichtung zentralisierte Intelligenz dezentral verteilt wird. Die zu diesem Zwecke in die Speicher des Peripheriemoduls geladenen Peripheriesteuerprozeduren und Peripheriesteuerprozesse gelangen dort über eine periphere Steuereinrichtung zum Ablauf. In der Praxis bedeutet dies, daß bereits in der Peripherie Steuervorgänge durchgeführt werden, die sonst die zentrale Steuereinrichtung in ihrem Zusammenwirken mit den Peripheriemodulen belastet haben. Weiterhin hat dies zur Folge, daß der hohe Datenfluß zwischen Peripheriemodul und der zentralen Steuereinrichtung vermieden wird, was eine vorteilhafte Erhöhung der Dynamik des gesamten Systems bedeutet.

Eine vorteilhafte Weiterbildung des erfindungsgemäßen Verfahrens ist das Aufsynchronisieren des Peripheriemoduls nach einer Inbetriebnahme. Da die Taktversorgung in Kommunikationssystemen aus Sicherheitsgründen mindestens gedoppelt vorhanden ist, kann im Fehlerfall auf ein parallel ausgelegtes, noch intaktes Peripheriemodul umgeschaltet werden. Das fehlerhafte Peripheriemodul wird dann für Reparaturzwecke dem Kommunikationssystem entnommen und durch ein intaktes ersetzt. Bevor Peripheriesteuerprozeduren und Peripheriesteuerprozesse von der zentralen Steuereinrichtung über eine HDLC-Steuerleitung zu dem ersetzten Peripheriemodul übertragen werden können, muß dieses zunächst durch eine Initialisierungsprozedur in einen definierten Anfangszustand versetzt werden. Weiterhin muß eine Erkennungsprozedur dafür Sorge tragen, daß die in der zentralen Steuereinrichtung mit den Daten aller Module des Kommunikationssystems geladenen Tabellen entsprechend aktualisiert werden. Ferner muß eine Verwaltungsprozedur dafür Sorge tragen, daß der physikalische Zustand des Peripheriemoduls erfaßt wird, um die entsprechenden Ladevorgänge der Peripheriesteuerprozeduren und Peripheriesteuerprozesse von der zentralen Steuereinrichtung aus in die Speicher des Peripheriemoduls durchführen zu können - Anspruch 2.

Eine weitere vorteilhafte Weiterbildung des erfindungsgemäßen Verfahrens ist darin zu sehen, daß der Ankoppelvorgang zu einem in der zentralen Steuereinrichtung ablaufenden zentralen Steuerprozeß mit einem Auftrag an das Peripheriemodul eingeleitet wird. Mit diesem Auftrag wird dem Peripheriemodul mitgeteilt, ob ein Ankoppeln im Sinne eines Aufsynchronisierens auf einen externen Referenztakt vorgenommen werden soll oder nicht. Dies wird dem Peripheriemodul dadurch signalisiert, daß dieser Auftrag von einer im Peripheriemodul ablaufenden Steuerroutine bewertet und in Abhängigkeit vom Resultat der Bewertung eine Flagge gesetzt wird - Anspruch 3. Der Vorteil dieser Vorgehensweise liegt darin, daß Aufträge und Meldungen nicht aus der zentralen Steuereinrichtung abgerufen und über die Steuerleitung übertragen werden müssen, da diese Information mit dem Setzen der Flagge im Peripheriemodul abrufbar ist.

Eine weitere vorteilhafte Weiterbildung des erfindungsgemäßen Verfahrens besteht darin, daß, falls der externe Referenztakt eine ausreichende Qualität besitzt, ein Interrupt zu einer ersten Steuerroutine abgesetzt wird, woraufhin diese dazu veranlaßt wird, in Abhängigkeit von einer, durch eine zweite Steuerroutine gesetzten Flagge den externen Referenztakt zu den Taktmodulen über auf dem Peripheriemodul angeordnete Multiplexelemente durchzuschalten - Anspruch 4. Damit kann das externe Peripheriemodul selbständig einen externen Referenztakt mit ausreichender Qualität zu der zentralen Takterzeugung in der zentralen Steuereinrichtung weiterschalten.

Eine weitere vorteilhafte Ausgestaltung des erfindungsgemäßen Verfahrens besteht darin, daß auf der Steuerleitung zwischen dem Peripheriemodul und der zentralen Steuereinrichtung das HDLC-Übertragungsverfahren benutzt wird - Anspruch 5. Damit ist die Übertragung zwischen beiden Einheiten meldungsgesteuert, was die Dynamikverminderung im System erleichtert.

Eine weitere vorteilhafte Ausgestaltung des erfindungsgemäßen Verfahrens besteht darin, daß das System selbständig die logischen und physikalischen Daten aller vorhandenen Peripheriemodule zyklisch abfragt, und gegebenenfalls einen Auftrag zum Aufsynchronisieren absetzt, falls der Aufsynchronisierungsvorgang im ersten Peripheriemodul nicht durchgeführt werden konnte - Anspruch 6. Damit ist sichergestellt, daß im Falle eines Totalausfalls oder eines verzerrt ankommenden externen Referenztaktes dieser zum Aufsynchronisieren nicht benutzt wird, wodurch Übertragungsfehler vermindert werden.

Eine weitere vorteilhafte Ausgestaltung des erfindungsgemäßen Verfahrens besteht darin, daß vom Peripheriemodul eine automatische Bewertung im Sinne einer Dauerüberwachung des externen Referenztaktes durchgeführt wird - Anspruch 7. Dies bedeutet, daß bei Totalausfall oder einer unzulässigen Verzerrung des externen Referenztaktes auf einen anderen, externen Referenztakt umgeschaltet wird.

Die Erfindung wird anhand zweier Zeichnungen näher erläutert.

Es zeigen
- FIG 1: ein Blockdiagramm mit einer zentralen Steuereinrichtung sowie den jeweiligen, mit Amtsleitungen verbundenen Peripheriemodulen, und
- FIG 2: den Meldungs-/Quittungsverkehr über die Steuerleitung zwischen Peripheriemodulen und der zentralen Steuereinrichtung.

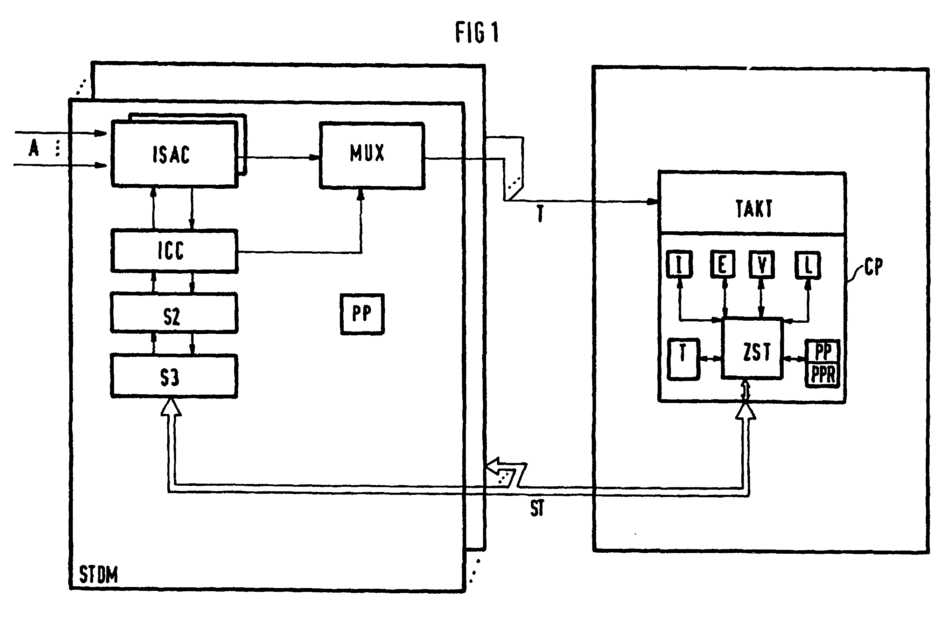

In FIG 1 ist das Zusammenwirken der jeweiligen Hard- und Softwarekomponenten aufgezeigt. Zentraler Bestandteil des Kommunikationssystems ist die zentrale Steuereinrichtung CP. Darin sind die der Takterzeugung und Taktverteilung dienenden zentralen Anteile als Taktmodule TAKT angeordnet. Weiterhin sind in der zentralen Steuereinrichtung CP Prozeduren I, E, V, L, PP, Prozesse ZST, PPR und Tabellen T abgespeichert, die der Durchführung des erfindungsgemäßen Verfahrens dienen. Darin sind logische Daten und physikalische Zustandsdaten aller im Kommunikationssystem verwendeten Module abgespeichert. Somit werden von der Tabelle T Aufgaben im Sinne einer Modulverwaltung wahrgenommen. Den physikalischen und logischen Zustandsdaten sind weiterhin Prioritätsstufen zugeordnet; dies bedeutet, daß im Falle einer Änderung der physikalischen Zustandsdaten eine Reaktion des Systems entsprechend den zugewiesenen Prioritätsstufen erfolgt.

Die Koordinierung der in der zentralen Steuereinrichtung CP ablaufenden Prozeduren wird von einem zentralen Steuerprozeß ZST übernommen, der zu diesem Zweck Schnittstellen zu der Initialisierungsprozedur I, der Erkennungsprozedur E, der Verwaltungsprozedur V sowie der Ladeprozedur L aufweist. Weiterhin ist eine Schnittstelle zu einer Tabelle T ausgelegt. Ferner ist eine Schnittstelle zu einer Steuerleitung ST vorhanden, die die jeweiligen Signale und Daten in Meldungen gemäß dem HDLC-Übertragungsverfahren überführt. Über diese Steuerleitung ST sind die Peripheriemodule STMD herangeführt. Die Amtsleitungen A sind an Schnittstellenelemente ISAC der Peripheriemodule STMD angeschlossen. Diese sind ihrerseits über eine erste Steuerroutine ICC mit zweiten und dritten Steuerroutinen S2 und S3 an die Steuerleitung ST angeschlossen. In der dritten Steuerroutine S3 wird die Schicht 3 des externen Referenztaktes überprüft. In der zweiten Steuerroutine S2 findet eine Bewertung der Schicht 2 des externen Referenztaktes statt; ferner werden hier die von der zentralen Steuereinrichtung CP ausgehenden Aufträge aus gewertet und in Abhängigkeit vom Ergebnis eine Flagge in der ersten Steuerroutine ICC gesetzt.

Die mit den Amtsleitungen A verbundenen Schnittstellenelemente ISAC führen automatisch eine Bewertung des externen Referenztaktes durch und synchronisieren sich bei ausreichender Qualität auf den soeben bewerteten externen Referenztakt auf. Dabei bedeutet eine ausreichende Qualität, daß der Takt hinsichtlich seiner Verwendung als Referenztakt geeignet ist. Dies bedeutet, daß ein externer Referenztakt während des Übertragungsvorgangs über die Amtsleitungen zum Beispiel nicht in Flanke, Frequenz, Phase oder Amplitude derart verzerrt wurde, daß ein Aufsynchronisieren nicht möglich ist. Weiterhin sind auf den Peripheriemodulen STMD Multiplexelemente MUX vorgesehen, die, gesteuert von der ersten Steuerroutine ICC, den externen Referenztakt über Taktleitungen T zu den zentralen Taktmodulen TAKT durchschalten.

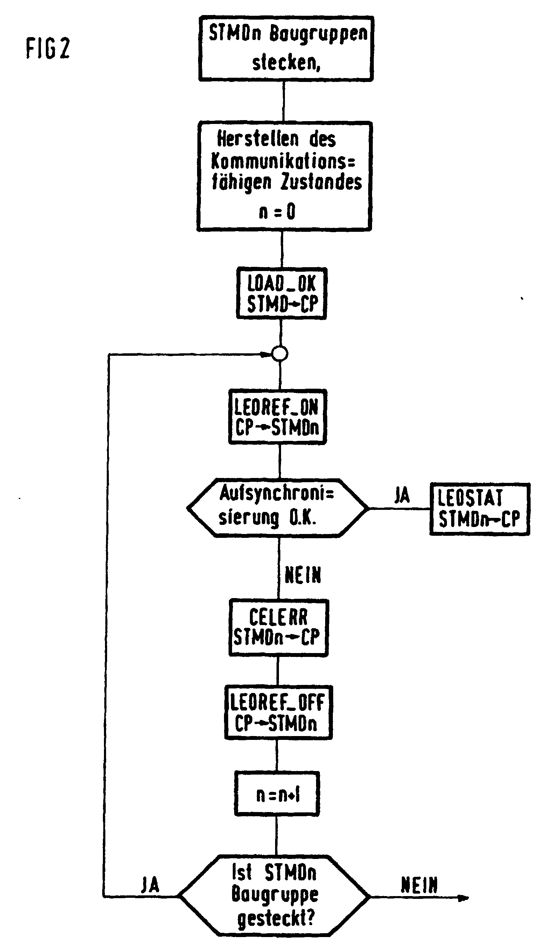

FIG 2 zeigt ein Flußdiagramm des erfindungsgemäßen Verfahrens. Zunächst wird davon ausgegangen, daß ein Peripheriemodul STMD aufgrund eines Defektes durch ein gleichartiges Peripheriemodul STMD ersetzt wird. Das Peripheriemodul STMD wird dabei im Spannungszustand in das Kommunikationssystem eingeführt. Das Einführen eines Peripheriemoduls STMD wird dem zentralen Steuerprozeß ZST durch eine Meldung über die Steuerleitung ST mitgeteilt. Daraufhin wird von demselben eine Initialisierungsprozedur I gestartet, die das Peripheriemodul STMD in einen definierten Anfangszustand versetzt. Im Anschluß daran wird vom zentralen Steuerprozeß ZST eine Erkennungsprozedur E gestartet, die logische Parameter des Peripheriemoduls STMD in eine Tabelle T der zentralen Steuereinrichtung CP einträgt. Weiterhin wird eine Verwaltungsprozedur V vom zentralen Steuerprozeß ZST gestartet, der den physikalischen Zustand des Peripheriemoduls STMD erfaßt und ebenfalls in die Tabelle T einträgt. In Abhängigkeit vom physikalischen Zustand des Peripheriemoduls STMD wird dann ebenfalls vom zentralen Steuerprozeß ZST eine Ladeprozedur L gestartet, die die Peripheriesteuerprozeduren PP und Peripheriesteuerprozesse PPR in die Speicher des Peripheriemoduls STMD überträgt. Der Abschluß der Übertragungsvorgänge wird durch eine erste Meldung LOAD_OK über die Steuerleitung ST der zentralen Steuereinrichtung CP mitgeteilt. Dort wird diese vom zentralen Steuerprozeß ZST ausgewertet und mit einer zweiten Meldung LEOREF_ON zum Peripheriemodul STMD quittiert. Die zweite Meldung LEOREF_ON bildet den Auftrag von der zentralen Steuereinrichtung CP an das Peripheriemodul STMD, daß ein Aufsynchronisieren erwünscht ist. Von der zweiten Steuerroutine S2 des Peripheriemoduls STMD wird die Meldung LEOREF_ON ausgewertet und in Abhängigkeit vom Resultat der Auswertung in der ersten Steuerroutine ICC eine Flagge gesetzt.

Weiterhin wird von den Schnittstellenmodulen ISAC, die mit den Amtsleitungen verbunden sind, automatisch eine Bewertung des auf den Amtsleitungen A geführten externen Referenztaktes durchgeführt. Falls der externe Referenztakt eine ausreichende Qualität aufweist, wird dann ein Aufsynchronisieren durchgeführt sowie anschließend ein Interrupt I zur ersten Steuerroutine ICC abgesetzt. Ist dort die Flagge gesetzt, so wird von der ersten Steuerroutine ICC der externe Referenztakt über Multiplexelemente MUX und einer damit verbundenen Taktleitung T zu den Taktmodulen TAKT durchgeschaltet. Damit ist dann der externe Referenztakt im System verfügbar. Dies wird der zentralen Steuereinrichtung CP dadurch signalisiert, daß von dem Peripheriemodul STMD eine Quittungsmeldung LEOSTAT zum zentralen Steuerprozeß ZST übertragen wird. Kann der Aufsynchronisiervorgang von den Schnittstellenelementen ISAC nicht durchgeführt werden, weil etwa die Qualität des externen Referenztaktes nicht ausreicht, so wird vom Peripheriemodul STMD eine Meldung CELERR zur zentralen Steuereinrichtung CP abgesetzt. In diesem Fall nimmt die zentrale Steuereinrichtung CP den Auftrag zurück, indem sie zum Peripheriemodul STMD die Meldung LEOREF_OFF sendet; damit wird der auswertenden, zweiten Steuerroutine S2 signalisiert, die gesetzte Flagge zurückzusetzen.

Durch die Meldung CELERR wird der zentralen Steuereinrichtung CP mitgeteilt, daß ein Aufsynchronisieren auf den dem Peripheriemodul zugeführten externen Referenztakt aufgrund seiner mangelnden Qualität nicht möglich war. In diesem Fall überprüft der zentrale Steuerprozeß ZST, ob weitere Peripheriemodule STMD mit daran angeschlossenen Amtsleitungen A vorhanden sind. Diese Information ist - ebenso wie die physikalischen Zustände aller Peripheriemodule - in der Tabelle T abgelegt. Sind weitere Peripheriemodule vorhanden, wird vom zentralen Steuerprozeß ZST entsprechend der vorher beschriebenen Vorgehensweise das nächste Peripheriemodul STMD adressiert. In FIG 2 ist die Anzahl der Peripheriemodule STMD durch den Index n am Peripheriemodul STMDₙ hervorgehoben. Falls auch ein zweites Peripheriemodul STMD2 ein Aufsynchronisieren auf einen externen Referenztakt nicht durchführen kann, muß somit vom zentralen Steuerprozeß ZST ein zyklisches Abfragen aller vorhandenen Peripheriemodule STMDₙ durchgeführt werden.

Weiterhin kann durch das erfindungsgemäße Verfahren die automatische Bewertung im Sinne einer Dauerüberwachung in den Schnittstellenmodulen STMD gesteuert werden. Kommt es wahrend des Betriebes zu einem Totalausfall oder gar einer unzulässigen Verzerrung des externen Referenztaktes, so wird eine Meldung CELERR zum zentralen Steuerprozeß ZST gesendet, woraufhin dieser durch eine Meldung LEOREF_OFF den Auftrag zurücknimmt. Dies bedeutet, daß die in der ersten Steuerroutine ICC gesetzte Flagge zurückgesetzt wird. Anschließend werden dann vom zentralen Steuerprozeß ZST in Abhängigkeit von den in der Tabelle T abgelegten logischen und physikalischen Zustandsdaten die weiteren Peripheriemodule STMD mit dem Aufsynchronisieren auf einen externen Referenztakt beauftragt.

## Patentansprüche

1. Verfahren zum automatischen Ankoppeln wenigstens eines externen, über Amtsleitungen (A) herangeführten Referenztaktes an eine
- zentrale Steuereinrichtung (CP) eines Kommunikationssystems, in der Taktmodule (TAKT) angeordnet sind, über
- wenigstens ein, zwischen den Amtsleitungen (A) und der zentralen Steuereinrichtung (CP) eingefügtes Peripheriemodul (STMD), das über Taktleitungen (T) und Steuerleitungen (ST) an die zentrale Steuereinrichtung (CP) herangeführt ist,
**dadurch gekennzeichnet,**
**daß** eine systemkonforme Inbetriebnahme des wenigstens einen Peripheriemoduls (STMD) durchgeführt und die erfolgreiche Inbetriebnahme mit einer, zur zentralen Steuereinrichtung (CP) gesendeten, ersten Meldung (LOAD_OK) beendet wird, wodurch ein in der zentralen Steuereinrichtung (CP) ablaufender zentraler Steuerprozeß (ZST) dazu veranlaßt wird, dem wenigstens einen Peripheriemodul (STMD) mit einer zweiten Meldung (LEOREF_ON) einen Ankopplungsauftrag zu erteilen, der in einer, in dem wenigstens einen Peripheriemodul (STMD) ablaufenden Steuerroutine (ICC) abgespeichert wird, und
**daß** von auf dem Peripheriemodul (STMD) angeordneten Schnittstellenmodulen (ISAC) automatisch eine Bewertung der Qualität des über die Amtsleitungen (A) herangeführten, wenigstens einen externen Referenztaktes durchgeführt und
- bei ausreichender Qualität eine Ankopplung im Sinne eines Aufsynchronisierens der Schnittstellenmodule (ISAC) auf den bewerteten externen Referenztakt durchgeführt, in Abhängigkeit vom erteilten Auftrag eine Durchschaltung des externen Referenztaktes über die Taktleitungen (T) zu den Taktmodulen (TAKT) gesteuert und der zentralen Steuereinrichtung (CP) mit einer dritten Meldung (LEOSTAT) das erfolgreiche Durchschalten übermittelt wird, und
- bei nicht ausreichender Qualität eine vierte Meldung (CELERR) zur zentralen Steuereinrichtung (CP) gesendet wird, wodurch der zentrale Steuerprozeß (ZST) dazu veranlaßt wird, den erteilten Auftrag mit einer fünften Meldung (LEOREF_OFF) zurückzunehmen.

2. Verfahren nach Anspruch 1,
**dadurch gekennzeichnet,**
**daß** die systemkonforme Inbetriebnahme des Peripheriemoduls (STMD) hergestellt wird, indem von einem zentralen Steuerprozeß (ZST) der zentralen Steuereinrichtung (CP)
- eine Initialisierungsprozedur (I) gesteuert wird, über die das Peripheriemodul (STMD) in einen definierten Anfangszustand versetzt wird,
- eine Erkennungsprozedur (E) gesteuert wird, über die eine Zuordnung logischer Parameter des Peripheriemoduls (STMD) zu, in der zentralen Steuereinrichtung (CP) in einer im Sinne einer Modulverwaltung definierten Tabelle (T) abgelegte Daten durchgeführt wird,
- eine Verwaltungsprozedur (V) gesteuert wird, über die der physikalische Zustand des Peripheriemoduls (STMD) erfaßt und in die Tabelle T eingetragen wird, und
- in Abhängigkeit vom physikalischen Zustand des Peripheriemoduls (STMD) eine Ladeprozedur (L) gestartet wird, über die Peripheriesteuerprozeduren (PP) und Peripheriesteuerprozesse (PPR) in die Speicher des Peripheriemoduls (STMD) geladen und durch eine periphere Steuereinrichtung (PP) zum Ablauf gebracht werden.

3. Verfahren nach Anspruch 1 oder 2,
**dadurch gekennzeichnet,**
**daß** der mit der zweiten Meldung (LEOREF_ON) erteilte Auftrag von einer zweiten Steuerroutine (S2) des Peripheriemoduls (STMD) ausgewertet und in Abhängigkeit vom Resultat der Auswertung in der ersten Steuerroutine (ICC) eine Flagge gesetzt wird.

4. Verfahren nach Anspruch 1 oder 3,
**dadurch gekennzeichnet,**
**daß** bei ausreichender Qualität ein Interrupt (I) von den Schnittstellenelementen (ISAC) zu der ersten Steuerroutine (ICC) abgesetzt wird, woraufhin diese dazu veranlaßt wird, in Abhängigkeit von der gesetzten Flagge den externen Referenztakt zu den Taktmodulen (TAKT) über auf dem Peripheriemodul (STMD) angeordneten Multiplexelementen (MUX) durchzuschalten.

5. Verfahren nach Anspruch 1,
**dadurch gekennzeichnet,**
**daß** als Übertragungsverfahren auf der Steuerleitung (ST) das HDLC-Ubertragungsverfahren benutzt wird.

6. Verfahren nach einem der vorhergehenden Ansprüche,
**dadurch gekennzeichnet,**
**daß** bei nicht ausreichender Qualität vom zentralen Steuerprozeß (ZST) in Abhängigkeit von den in der Tabelle (T) abgelegten logischen Parametern mit der zweiten Meldung (LEOREF_ON) ein Auftrag an ein weiteres Peripheriemodul (STMD) erteilt wird.

7. Verfahren nach einem der vorhergehenden Ansprüche,
**dadurch gekennzeichnet,**
**daß** von den Schnittstellenmodulen (ISAC) eine automatische Bewertung im Sinne einer Dauerüberwachung des externen Referenztaktes durchgeführt wird, und im negativen Falle der automatischen Bewertung vom zentralen Steuerprozeß (ZST) ein Ankoppeln auf einen anderen, externen Referenztakt gesteuert wird.

## Claims

1. Method for automatic coupling of at least one external reference clock, which is routed via exchange lines (A), to a
- central control device (CP) of a communication system, in which clock modules (TAKT) are arranged, via
- at least one peripheral module (STMD), which is inserted between the exchange lines (A) and the central control device (CP) and is routed via clock lines (T) and control lines (ST) to the central control device (CP),
**characterized**
**in that** a system-conformal start up of the at least one peripheral module (STMD) is carried out, and the successful start up is ended by a first message (LOAD_OK) which is sent to the central control device (CP), which results in the initiation of a central control process (ZST), which runs in the central control device (CP), such that a coupling request can be passed to the at least one peripheral module (STMD) by using a second message (LEOREF_ON), which coupling request is stored in a control routine (ICC) which runs in the at least one peripheral module (STMD), and
**in that** interface modules (ISAC), which are arranged on the peripheral module (STMD), automatically carry out an assessment of the quality of the at least one external reference clock which is routed via the exchange lines (A), and
- if the quality is sufficient, coupling takes place in the sense of synchronization of the interface modules (ISAC) to the assessed external reference clock, through-switching of the external reference clock via the clock lines (T) to the clock modules (TAKT) is controlled as a function of the request that has been produced, and the successful through-switching is transmitted to the central control device (CP) by means of a third message (LEOSTAT), and
- if the quality is not sufficient, a fourth message (CELERR) is sent to the central control device (CP), causing the central control process (ZST) to withdraw the request that was produced, using a fifth message (LEOREF_OFF).

2. Method according to Claim 1,
**characterized**
**in that** the system-conformal start up of the peripheral module (STMD) is produced in that a central control process (ZST) in the central control device (CP)
- controls an initialization procedure (I) via which the peripheral module (STMD) is changed to a defined initial state,
- controls an identification procedure (E), via which logic parameters of the peripheral module (STMD) are associated with data stored in a table (T) which is defined for module management purposes, in the central control device (CP),
- controls management procedure (V), via which the physical state of the peripheral module (STMD) is recorded and is entered in the table T, and
- as a function of the physical state of the peripheral module (STMD), starts a loading procedure (L) via which peripheral control procedures (PP) and peripheral control processes (PPR) are loaded into the memory of the peripheral module (STMD), and are caused to run by a peripheral control device (PP).

3. Method according to Claim 1 or 2,
**characterized**
**in that** the request which is made using the second message (LEOREF_ON) is evaluated by a second control routine (S2) in the peripheral module (STMD), and a flag is set as a function of the result of the evaluation in the first control routine (ICC).

4. Method according to Claim 1 or 3,
**characterized**
**in that**, if the quality is sufficient, an interrupt (I) is sent from the interface elements (ISAC) to the first control routine (ICC) which causes the latter to switch through, as a function of the set flag, the external reference clock to the clock modules (TAKT) via multiplexing elements (MUX) which are arranged on the peripheral module (STMD).

5. Method according to Claim 1,
**characterized**
**in that** the HDLC transmission method is used as the transmission method on the control line (ST).

6. Method according to one of the preceding claims,
**characterized**
**in that**, if the quality is not sufficient, the central control process (ZST) submits a request to a further peripheral module (STMD), using the second message (LEOREF_ON), as a function of the logic parameters stored in the table (T).

7. Method according to one of the preceding claims,
**characterized**
**in that** the interface modules (ISAC) carry out an automatic assessment in the sense of continuous monitoring of the external reference clock and, if the result of the automatic assessment is negative, the central control process (ZST) controls the process of coupling to another, external reference clock.

## Revendications

1. Procédé pour connecter automatiquement au moins une horloge de référence externe acheminée par des lignes réseau (A) à un
- dispositif de commande centrale (CP) d'un système de communication, dans lequel sont placés des modules d'horloge (TAKT), par l'intermédiaire
- d'au moins un module périphérique (STMD) inséré entre les lignes réseau (A) et le dispositif de commande centrale (CP) et qui est acheminé au dispositif de commande centrale (CP) par des circuits d'horloge (T) et des circuits de commande (ST),
**caractérisé**
**en ce qu'**une mise en service conforme au système dudit au moins un module périphérique (STMD) est effectuée et qu'il est mis fin à la mise en service fructueuse à l'aide d'un premier message (LOAD_OK) envoyé au dispositif de commande centrale (CP) et par lequel un processus de commande centrale (ZST) se déroulant dans le dispositif de commande centrale (CP) est invité à donner audit au moins un module périphérique (STMD), à l'aide d'un deuxième message (LEOREF_ON), un ordre de connexion qui est enregistré dans une routine de commande (ICC) se déroulant dans ledit au moins un module périphérique (STMD), et
**en ce que** des modules d'interface (ISAC) placés sur le module périphérique (STMD) procèdent à une évaluation automatique de la qualité de ladite au moins une horloge de référence externe acheminée par des lignes réseau (A) et
- qu'en cas de qualité suffisante une connexion dans le sens d'une resynchronisation des modules d'interface (ISAC) sur l'horloge de référence externe évaluée est opérée, qu'en fonction de l'ordre donné une commutation de l'horloge de référence externe, par l'intermédiaire des circuits d'horloge (T), vers les modules d'horloge (TAKT) est commandée et que la commutation fructueuse est transmise au dispositif de commande centrale (CP) à l'aide d'un troisième message (LEOSTAT), et
- qu'en cas de qualité insuffisante, un quatrième message (CELERR) est envoyé au dispositif de commande centrale (CP), par lequel le processus de commande centrale (ZST) est invité à annuler l'ordre donné à l'aide d'un cinquième message (LEOREF_OFF).

2. Procédé selon la revendication 1, **caractérisé en ce que** la mise en service conforme au système du module périphérique (STMD) est obtenue grâce au fait que par un processus de commande centrale (ZST) du dispositif de commande centrale (CP)
- une procédure d'initialisation (I) est commandée, par laquelle le module périphérique (STMD) est mis dans un état initial défini,
- une procédure d'identification (E) est commandée, par laquelle s'effectue une affectation de paramètres logiques du module périphérique (STMD) à des données déposées dans une table (T) définie dans le sens d'une gestion de modules, dans le dispositif de commande centrale (CP),
- une procédure de gestion (V) est commandée, par laquelle l'état physique du module périphérique (STMD) est déterminé et inscrit dans la table (T), et
- en fonction de l'état physique du module périphérique (STMD), une procédure de chargement (L) est lancée, par laquelle les procédures de commande de périphérie (PP) et les processus de commande de périphérie (PPR) sont chargés dans la mémoire du module périphérique (STDM) et mis à exécution par un dispositif de commande périphérique (PP).

3. Procédé selon la revendication 1 ou 2, **caractérisé en ce que** l'ordre donné par le deuxième message (LEOREF_ON) est évalué par une deuxième routine de commande (S2) du module périphérique (STMD) et **en ce qu'**en fonction du résultat de l'évaluation, un drapeau est mis dans la première routine de commande (ICC).

4. Procédé selon la revendication 1 ou 3, **caractérisé en ce qu'**en cas de qualité suffisante une interruption (I) est transmise par les éléments d'interface (ISAC) à la première routine de commande (ICC), suite à laquelle celle-ci est invitée, en fonction du drapeau mis, à commuter l'horloge de référence externe vers les modules d'horloges (TAKT) par l'intermédiaire d'éléments multiplexeurs (MUX) placés sur le module périphérique (STMD).

5. Procédé selon la revendication 1, **caractérisé en ce qu'**on utilise comme procédé de transfert sur le circuit de commande (ST) le procédé de transfert HDLC.

6. Procédé selon l'une des revendications précédentes, **caractérisé en ce qu'**en cas de qualité insuffisante, en fonction des paramètres logiques déposés dans la table (T), le processus de commande centrale (ZST) donne un ordre à un autre module périphérique (STMD), à l'aide du deuxième message (LEOREF_ON).

7. Procédé selon l'une des revendications précédentes, **caractérisé en ce que** les modules d'interface (ISAC) procèdent à une évaluation automatique dans le sens d'une surveillance permanente de l'horloge de référence externe et **en ce que** dans le cas négatif de l'évaluation automatique une connexion à une autre horloge de référence externe est commandée par le processus de commande centrale (ZST).
